# EUROPÄISCHE PATENTSCHRIFT

(11) **EP 1 131 194 B1**
(45) Veröffentlichungstag und Bekanntmachung des Hinweises auf die Patenterteilung: **12.03.2003**
(21) Anmeldenummer: 00965994.7
(22) Anmeldetag: 13.09.2000
(51) Int. Cl.: B29B 9/06, B29C 47/34

(54) **VORRICHTUNG ZUM ZULEITEN VON AUS DÜSEN AUSTRETENDEN, SCHMELZFLÜSSIGEN KUNSTSTOFFSTRÄNGEN ZU EINER ABLAUFRINNE**
DEVICE FOR FEEDING STRANDS OF MOLTEN SYNTHETIC MATERIAL THAT ARE ISSUED FROM NOZZLES TO A DISCHARGE CHUTE
DISPOSITIF D'ACHEMINEMENT DE BOUDINS DE MATIERE SYNTHETIQUE EN FUSION SORTANT DE FILTRES, JUSQU'A UN CONDUIT DE COULEE

(30) Priorität: 13.09.1999 DE 19943754
(43) Veröffentlichungstag der Anmeldung: 12.09.2001
(73) Patentinhaber: RIETER AUTOMATIK GmbH, D-63762 Grossostheim (DE)
(72) Erfinder: ECKER, Andreas, 63303 Dreieich (DE)
(74) Vertreter: Bardehle, Heinz, Dipl.-Ing.
(86) Internationale Anmeldenummer: EP0008951
(87) Internationale Veröffentlichungsnummer: WO01019581

(56) Entgegenhaltungen:
- EP-A- 0 086 400
- DE-A- 4 414 753
- US-A- 5 863 564
- US-A- 5 888 554

## Beschreibung

Die Erfindung bezieht sich auf eine Vorrichtung zum Zuleiten von aus Düsen austretenden, schmelzflüssigen Kunststoffsträngen zu einer Ablaufrinne mit einem den Düsen folgenden Kühlwasserzulauf, bei der die Düsen in zwei Sätzen von jeweils mindestens einer Reihe derart angeordnet sind, daß in Ablaufrichtung abwechselnd neben-einander Stränge des einen und des anderen Satzes in Abstand zueinander geführt werden.

Eine derartige Vorrichtung ist aus der DE 26 55 840 A1 bekannt. Bei dieser Vorrichtung werden die Stränge aus zwei parallel nebeneinander liegenden Reihen von Düsen über eine Anordnung von Ablaufrinnen geleitet, bei der die Stränge aus jeweils einer Reihe von Düsen einer zugeordneten Ablaufrinne zugeführt werden und die beiden Ablaufrinnen Rücken an Rücken zueinander angeordnet sind. Um dabei den Strängen die notwendige Führung zu geben, bilden die Ablaufrinnen jeweils einen nach außen gerichteten abgerundeten Vorsprung, gegen die Stränge gezogen werden. An ihrem unteren Ende sind die Ablaufrinnen zusammengeführt, von wo die Stränge derart nebeneinander zusammentreffen, daß sie in kämmender Lage, also bezüglich ihrer zugehörigen Reihe abwechselnd nebeneinander angeordnet, mit relativ geringem Abstand zueinander zu einem Granulator weitergeführt werden.

Der Erfindung liegt die Aufgabe zugrunde, das Prinzip der Zusammenführung von schließlich relativ dicht nebeneinander liegenden Strängen bei einer Vorrichtung anwendbar zu machen, bei der die Kunststoffstränge über eine einzige schräg verlaufende Ablaufrinne geleitet werden.

Diese Aufgabe wird in Verbindung mit dem Oberbegriff des Patentanspruchs 1 dadurch gelöst, daß zwischen die Düsen und die Ablaufrinne zwei übereinander angeordnete Auffangrinnen derart zwischengeschaltet sind, daß die aus einem Satz von Düsen austretenden Stränge jeweils als eine Gruppe über eine der Auffangrinnen der Ablaufrinne zugeleitet werden, wobei die einzelnen Stränge beider Gruppen auf der Ablaufrinne abwechselnd nebeneinander in kämmender Lage auftreffen und von dieser weitergeleitet werden.

Auf jeder der beiden Auffangrinnen werden die Stränge als Gruppe durch den jeweiligen Kühlwasserzulauf sofort an ihrer Oberfläche gekühlt, so daß nach Verlassen der Auffangrinnen die Stränge nicht mehr miteinander verkleben können. Dies macht sich die erfindungsgemäße Vorrichtung dadurch zunutze, daß aufgrund der Düsenanordnung zunächst auf jeder Auffangrinne die Stränge als Gruppe mit einem ihr gegenseitiges Verkleben verhindernden Abstand geführt werden. Da nun die Düsen von einer Düsenreihe zur anderen versetzt zueinander angeordnet sind, laufen die von jeder Auffangrinne gelieferten, relativ weit voneinander beabstandeten Stränge auf der Ablaufrinne zusammen, wobei sich ihr vorher auf der betreffenden Auffangrinne eingehaltener Abstand auf die Hälfte verringert, was aber wegen der inzwischen eingetretenen Kühlung ihrer Oberfläche ungefährlich ist und ein gegenseitiges Verkleben der Stränge auf der Ablaufrinne mit Sicherheit verhindert. Diese kann nunmehr jedoch gegenüber jeder Auffangrinne die doppelte Anzahl von Strängen dicht nebeneinander führen, d.h., bei gleicher Breite der Ablaufrinne im Vergleich zu der bekannten Vorrichtung kann nunmehr die Ablaufrinne die doppelte Anzahl von Strängen nebeneinander führen, womit sich der Durchsatz der erfindungsgemäßen Vorrichtung mit nur einer Ablaufrinne gegenüber der bekannten Ablaufrinnenanordnung verdoppelt, ohne daß dabei die Ablaufrinne verbreitert werden muß. Dies wirkt sich natürlich genauso vorteilhaft auf den Granulator aus, der ebenfalls die doppelte Anzahl von Strängen verarbeiten kann, ohne daß sich seine Breite erhöhen muß.

Um eine Weiterverarbeitung von den Düsen geliefertem Strangmaterial zu verhindern, das zunächst noch nicht die erforderliche Qualität für die Weiterverarbeitung besitzt, gestaltet man die Vorrichtung zweckmäßig so, daß jede Auffangrinne zwischen einer Betriebslage, in der die Stränge von einer Auffangrinne aufgefangen werden, und einer Vorlaufstellung verschiebbar angeordnet ist, in der die Stränge neben der betreffenden Auffangrinne vorbeigeleitet werden. Erst wenn von seiner Qualität her verarbeitbares Strangmaterial angeliefert wird, wird dann dieses nach Verschieben der Auffangrinnen in die Betriebslage aufgefangen und zur Weiterverarbeitung der Ablaufrinne zugeleitet.

Die Trennung zwischen nicht verarbeitbarem und verarbeitbarem Strangmaterial wird dadurch erleichtert, daß mindestens einer Auffangrinne ein Trennelement zugeordnet ist, das beim Verschieben durch die Fallinie der Stränge in die Betriebslage die Stränge erfaßt und anschließend durchtrennt. Auf diese Art der Trennung von Strangmaterial wird in der EP 0 086 400 B1 hingewiesen. Eine besondere Gestaltung der Vorrichtung mit einem die Düsen überstreichenden Trennelement besteht vorteilhaft darin, daß oberhalb der obersten Auffangrinne ein die Düsen überstreichendes Trennelement vorgesehen ist, das beim Verschieben von der Betriebslage in die Vorlaufstellung die Stränge durchtrennt und die weiterhin austretenden Stränge mit einem Ableitelement von den Auffangrinnen wegleitet. Durch das Ableitelement wird dafür gesorgt, daß die Stränge aus qualitativ unzureichendem Material sicher von der Vorrichtung weggeleitet werden.

In den Figuren sind Ausführungsbeispiele der Erfindung dargestellt. Es zeigen
- Fig. 1: eine Seitenansicht der Vorrichtung in prinzipieller Darstellungsweise;
- Fig. 2: eine Draufsicht auf die beiden Auffangrinnen in ihrer Betriebslage, wobei jede Auffangrinne von zwei Reihen von Düsen gespeist wird;
- Fig. 3: eine der Darstellung gemäß Fig. 2 entsprechende Darstellung, allerdings mit Speisung jeweils einer Auffangrinne durch eine Düsenreihe;
- Fig. 4: die Vorrichtung gemäß Fig. 1, bei der sich beide Auffangrinnen in der Vorlaufstellung befinden, bei der die Stränge neben den Auffangrinnen frei herabfallen;
- Fig. 5: eine Vorrichtung mit einem Trennelement zum Abtrennen und Ableiten der aus den Düsen austretenden Stränge seitlich an den Auffangrinnen vorbei;
- Fig. 6: die Vorrichtung gemäß Fig. 5 mit ausgeschobenem Trennelement (Betriebslage), wobei die Stränge auf die Auffangrinnen auftreffen;
- Fig. 7: die Anordnung gemäß Fig. 1 mit unter die Stränge eingeschobenem Trennelement und Ableitung der Stränge (Vorlaufstellung).

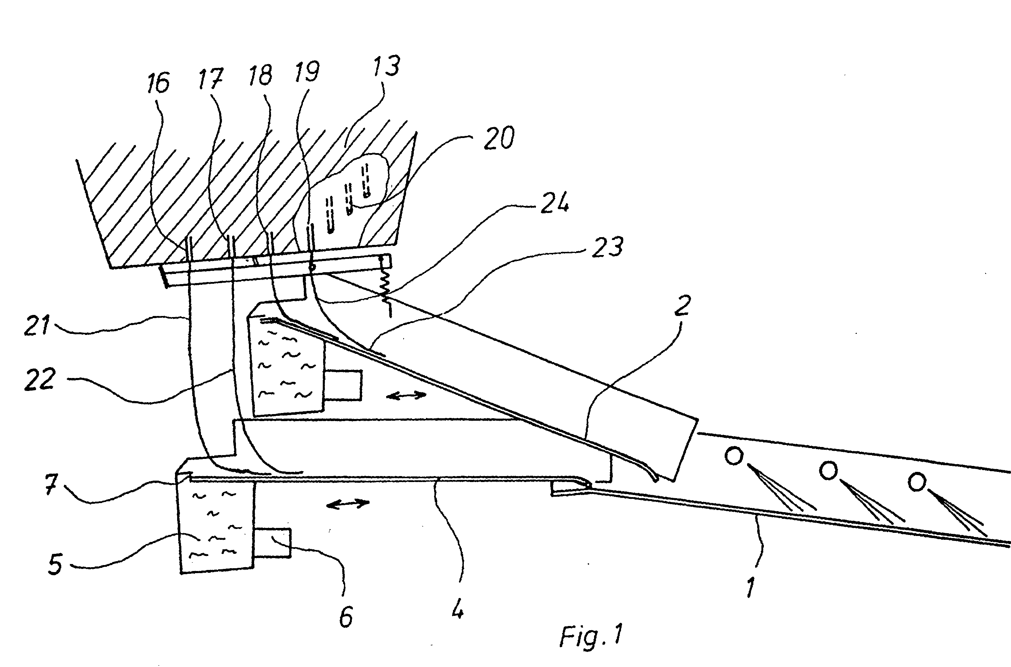

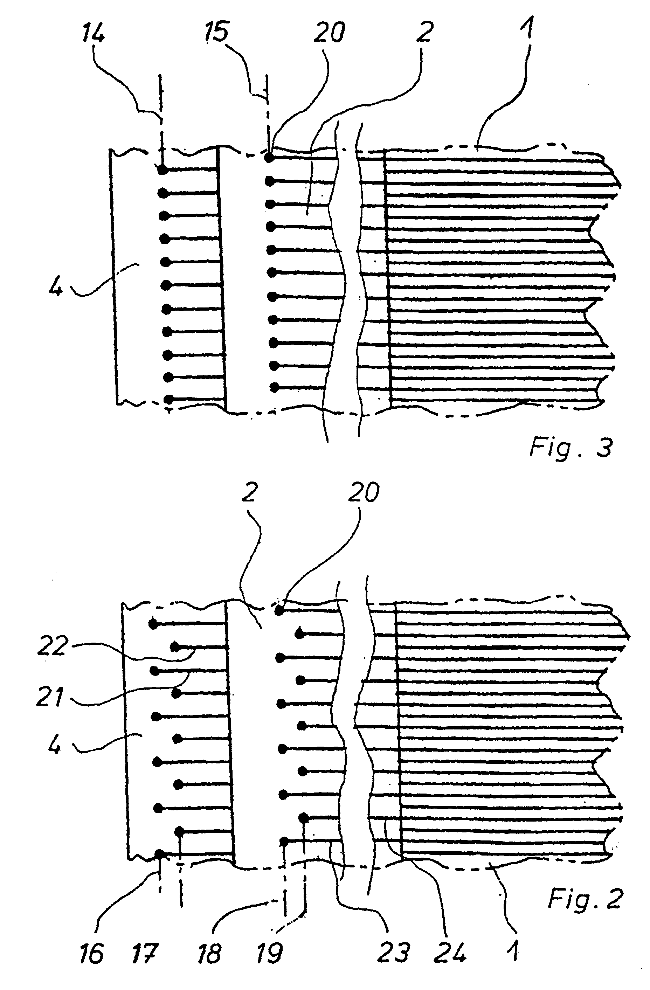

Fig. 1 zeigt den Düsenblock 13 mit den vier Düsenreihen 16, 17, 18 und 19, die jeweils eine Anzahl von Düsen 20 aufweisen, für deren Darstellung eine perspektivische Sicht im Bereich des Düsenblocks 13 gewählt ist. Die Anordnung der Düsen 20 in den Düsenreihen 16 - 17 ist auch der Fig. 2 zu entnehmen.

Die Düsen 20 der Düsenreihen 16 und 17 liefern die schmelzflüssigen Stränge 21 und 22 und die Düsen der Düsenreihen 18 und 19 die schmelzflüssigen Stränge 23 und 24. Die Stränge 21 und 22 werden von der verschiebbaren Auffangrinne 4 aufgefangen, die entsprechend dem eingezeichneten Doppelpfeil in horizontaler Richtung hin und her verschiebbar angeordnet ist. Die Auffangrinne 4 mündet in die Ablaufrinne 1. Die Auffangrinne enthält weiterhin den Wasserkasten 5, dem über den Zulauf 6 Kühlwasser zugeführt wird, das durch den Schlitz 7 des Wasserkastens 5 dem die Stränge 21 und 22 auffangenden Teil der Auffangrinne 4 zugeleitet wird. Das Kühlwasser läuft über den Boden der Auffangrinne 4 unter Mitnahme der Stränge 21 und 22 in Richtung auf die Ablaufrinne 1, wobei es die aufgefangenen Stränge 21 und 22 oberflächlich kühlt, so daß diese der Ablaufrinne am Ende der Auffangrinne 4 in einem Zustand übergeben werden, in dem sie auf der Ablaufrinne 1 trotz relativ enger Anordnung nebeneinander nicht miteinander verkleben können. Auf der Auffangrinne 4 laufen die Stränge 21 und 22 in einem solchen Abstand voneinander, daß sie sich nicht berühren können.

Entsprechendes gilt für die Stränge 23 und 24 auf der Auffangrinne 2.

Die von den im wesentlichen gleich langen Auffangrinnen 2 und 4 übernommenen Stränge 23, 24 und 21, 22 werden von den Auffangrinnen zu der Ablaufrinne 1 geleitet, auf der die Stränge zusammen mit dem zu den Auffangrinnen 2 und 4 zugeleiteten Kühlwasser weitergeführt werden und schließlich in einen nicht dargestellten Granulator gelangen. Bezüglich dieser weiteren Funktion, insbesondere der Ablaufrinne 1, sei auf die EP 0 086 400 B1 verwiesen.

Aufgrund der Anordnung der Düsen 20 in den Düsenreihen 16, 17, 18 und 19 ergibt sich eine Strangführung, durch die, wie nachstehend näher erläutert wird, eine besonders enge Führung der Stränge auf der Ablaufrinne 1 gewährleistet wird. Dies sei anhand der Fig. 2 erläutert.

In der Fig. 2 ist in schematischer Darstellungsweise die Anordnung der Düsenreihen 16, 17 und 18, 19 mit den Düsen 20 gezeigt, wobei die Düsenreihen 16 und 17 die von ihnen gelieferten Stränge 21 und 22 als Gruppe der Auffangrinne 4 zuleiten, von der hier nur ein Abschnitt dargestellt ist. Die Düsen 20 der Düsenreihen 18 und 19 liefern ihre Stränge 23 und 24 als weitere Gruppe zu der Auffangrinne 2. Da sich die Auffangrinne 2 oberhalb der Auffangrinne 4 befindet (siehe Fig. 1), verschwinden die Stränge 21 und 22 bei ihrer Weiterleitung zunächst unterhalb der Auffangrinne 2, bis sie hinter der Auffangrinne 2 wieder zu sehen sind und hier zusammen mit den Strängen 23 und 24 auf die Ablaufrinne 1 treffen.Wie Fig. 2 deutlich zeigt, sind die einzelnen Düsen 20 so angeordnet, daß die auf einer Auffangrinne 2 bzw. 4 laufenden Stränge zunächst einen solchen Abstand einhalten, daß sie sich nicht berühren und damit auch nicht verkleben können. Erst beim Zusammentreffen aller Stränge auf der Ablaufrinne 1 ergibt sich aufgrund der verschachtelten Anordnung der Düsen 20 in den einzelnen Düsenreihen 16 - 19 eine gleichmäßige dichte Anordnung, bei der die Stränge unter Umständen in Berührung kommen könnten, was aber hier nicht mehr zu einem Verkleben der Stränge führen kann, weil die Stränge aufgrund der Führung über die vorhergehenden Auffangrinnen 2 und 4 an ihrer Oberfläche ausreichend gekühlt sind. Dadurch ergibt sich auf der Ablaufrinne 1 eine besonders enge Strangfiührung. Die Ablaufrinne 1 und damit auch ein folgender Granulator können damit hinsichtlich der zur Verfügung stehenden Breite optimal für die Strangführung und die Granulierung der Stränge ausgenutzt werden.

In der Fig. 3 ist eine Variante zu der Düsenanordnung gemäß Fig. 2 dargestellt. Gemäß Fig. 3 existieren nur zwei Reihen von Düsen 20, nämlich die beiden Reihen 14 und 15, die ähnlich der Anordnung nach Fig. 2 die von ihnen gelieferten Stränge als Gruppe auf der betreffenden Ablaufrinne 2 bzw. 4 in einem ausreichenden Abstand zuführen. Nach Zusammenführung der Stränge auf der Ablaufrinne 1 ergibt sich dann die bereits aus Fig. 2 ersichtliche enge Strangführung, die zu dem gleichen Ergebnis führt wie die Strangführung gemäß Fig. 2. Die Anordnung der Düsen gemäß Fig. 3 ist natürlich auch ohne weiteres bei einer Vorrichtung gemäß Fig. 1 anwendbar.

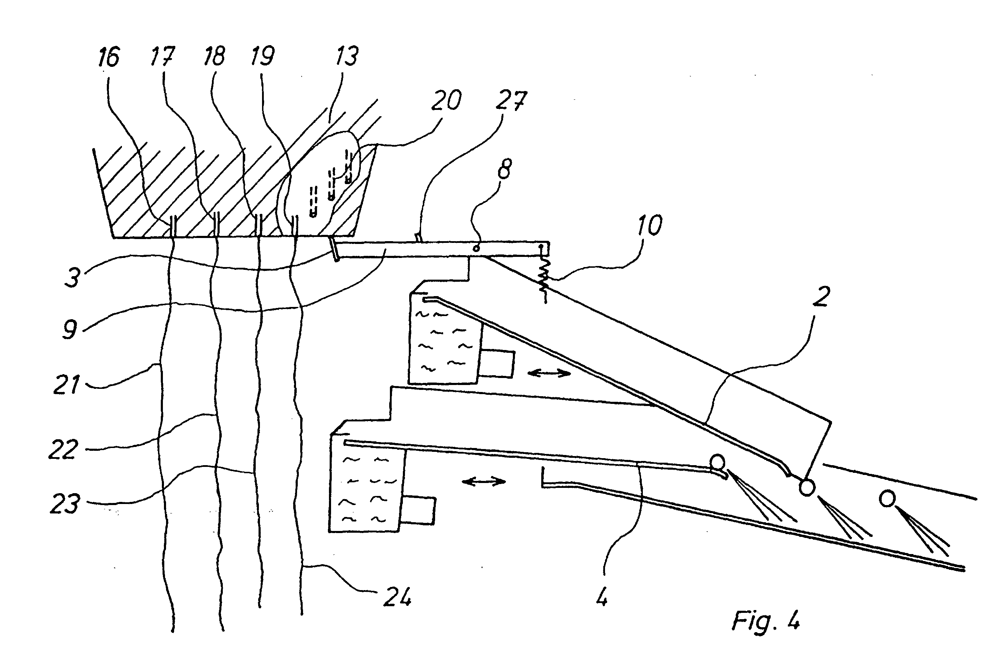

Anhand der Fig. 4 und Rückgriff auf Fig. 1 sei nunmehr eine Besonderheit der erfindungsgemäßen Vorrichtung erläutert, die darin besteht, daß die durch den jeweiligen Doppelpfeil an den Auffangrinnen 2 und 4 dargestellte horizontale Verschiebemöglichkeit der Auffangrinnen 2 und 4 besteht. Die Auffangvorrichtungen 2 und 4 können jeweils von einer Betriebsstellung in eine Vorlaufstellung und umgekehrt verschoben werden. In der Betriebsstellung, wie sie in Fig. 1 dargestellt ist, fangen die Auffangrinnen 4 und 2 die jeweils ihnen zugeordneten Stränge aus den Düsenreihen 16, 17 und 18, 19 auf und leiten diese in der oben beschriebenen Weise der Ablaufrinne 1 zu. Um nun beim Anfahren derartigen Vorrichtung zunächst geschmolzenes Kunststoffmaterial von der Vorrichtung fernzuhalten, das, wie üblich, anfangs noch nicht die für eine spätere Weiterverarbeitung notwendigen Eigenschaften aufweist, ist die durch die Doppelpfeile angedeutete Verschiebungsmöglichkeit vorgesehen. Diesbezüglich sei auf die EP 0 086 400 B1 verwiesen, in der auf die Ausnutzung einer solchen Verschiebungsmöglichkeit im Zusammenhang mit einer einzigen Ablaufrinne besonders eingegangen wird und in der die für die Gestaltung der Verschiebemöglichkeit notwendigen Organe gezeigt sind. Ausgehend von der in der Fig. 1 dargestellten Betriebslage lassen sich die beiden Auffangrinnen 2 und 4 in die in Fig. 4 dargestellte Vorlaufstellung verschieben, in der die aus den Düsen 20 austretenden Stränge neben den Auffangrinnen 2 und 4 frei herabfallen und daher nicht in die Ablaufrinne 1 gelangen können. Dieses somit unverarbeitet herabfallende Strangmaterial stellt beim vorstehend erwähnten Anfahren der Vorrichtung das zunächst noch unbrauchbare Material dar, das dann in einer in diesem Zusammenhang nicht interessierenden Weise entsorgt werden kann. Wenn dann nach einer bekannten Anfahrzeit das aus den Düsen 20 austretende Strangmaterial die für die Weiterverarbeitung erforderliche Eigenschaft erreicht hat, werden die beiden Auffangrinnen 2 und 4 in diesem Beispiel gleichzeitig in die in der Fig. 1 dargestellte Betriebslage verschoben, wobei die mit der Auffangrinne 2 in Verbindung stehenden Trennelemente 3 und 27 über die Düsen 20 hinweggleiten und dabei die austretenden Stränge durchtrennen. Die abgetrennten Stränge fallen dabei herab und werden gesondert aufgefangen, bis die Auffangrinne 2 ihre endgültige Betriebslage gemäß Fig. 1 erreicht hat, in der dann sämtliche Stränge von den ihnen zugeordneten Auffangrinnen 2 und 4 aufgefangen und weitergeleitet werden.

Die Betriebsweise der in Fig. 4 dargestellten Anordnung kann auch so erfolgen, daß die zwei Trennelemente 3 und 27 getrennt voneinander verfahrbar angeordnet sind. Somit besteht die Möglichkeit, nach dem Durchtrennen der aus den Düsen 20 ausgetretenen Stränge der Strangreihen 18 und 19 zunächst mit der Auffangrinne 2 in die Betriebsstellung zu fahren. Anschließend wird nachdem Durchtrennen der aus den Düsen 20 austretenden Stränge der Sirangreihen 16 und 17 die Auffangrinne 4 in Betriebsstellung gefahren. Diese Anfahrvariante hat den Vorteil, daß der nachgeschaltete hier nicht dargestellte Granulator nicht direkt mit Volllast betrieben wird. Der Abfahrvorgang erfolgt entsprechend in umgekehrter Reihenfolge.

Bei den Trennelementen 3 und 27 handelt es sich hier um eine Art Messer, die über die ebene Oberfläche des Düsenblocks 13 streichen. Die Messer 3 und 27 sind am Ende des um die Achse 8 drehbaren Hebels 9 befestigt. Der Hebel 9 wird an seinem den Messern 3 und 27 abgewandten Enden durch die Zugfeder 10, die an der Auffangrinne 2 eingehängt ist, gegen die Oberfläche des Düsenblocks 13 gedrückt, womit ein glattes Abschneiden der Stränge unmittelbar bei Austritt aus den Düsen 20 gewährleistet ist.

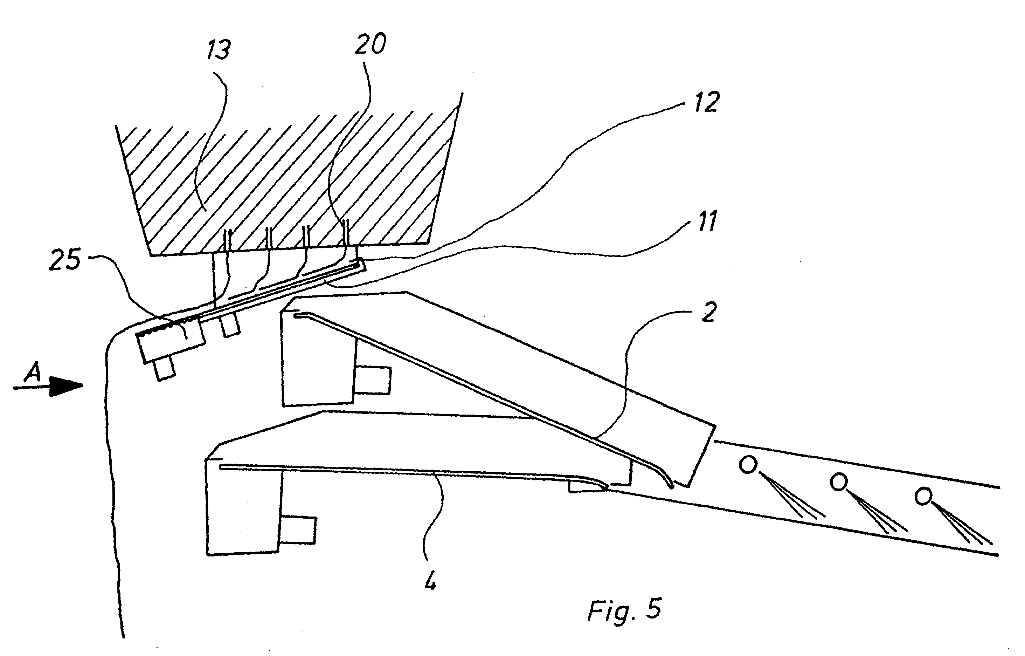

In den Fig. 5 bis 7 ist eine besondere Art der Ableitung von Strangmaterial in der Vorlaufstellung dargestellt. Gemäß Fig. 5 besitzt die Vorrichtung das Ableitelement 11, das aus einer schräg angeordneten Platte besteht, die wahlweise unter die Düsen 20 schiebbar ist. In der Fig. 5 ist das Ableitelement 11 in der Lage dargestellt, in der es die aus den Düsen 20 austretenden Stränge auffängt und seitlich wegleitet. Damit dabei die Stränge nicht an dem Ableitelement festkleben, ist dieses ähnlich wie die Auffangrinnen mit einem Wasserüberlauf 12 versehen, von dem aus Kühlwasser über das Ableitelement 11 geleitet wird. Damit das Wasser bequem abgeleitet werden kann, ist am Ende des Ableitelementes 11 eine Absaugvorrichtung 25 vorgesehen, die in bekannter Weise das von dem Ableitelement abfließende Wasser aufnimmt und ableitet. Wenn dann aus dem Düsenblock 13 gebrauchsfähiges Strangmaterial austritt, wird das Ableitelement weggeschoben, so daß die Stränge nunmehr auf die Auffangrinnen geleitet werden können, wie dies oben dargestellt ist.

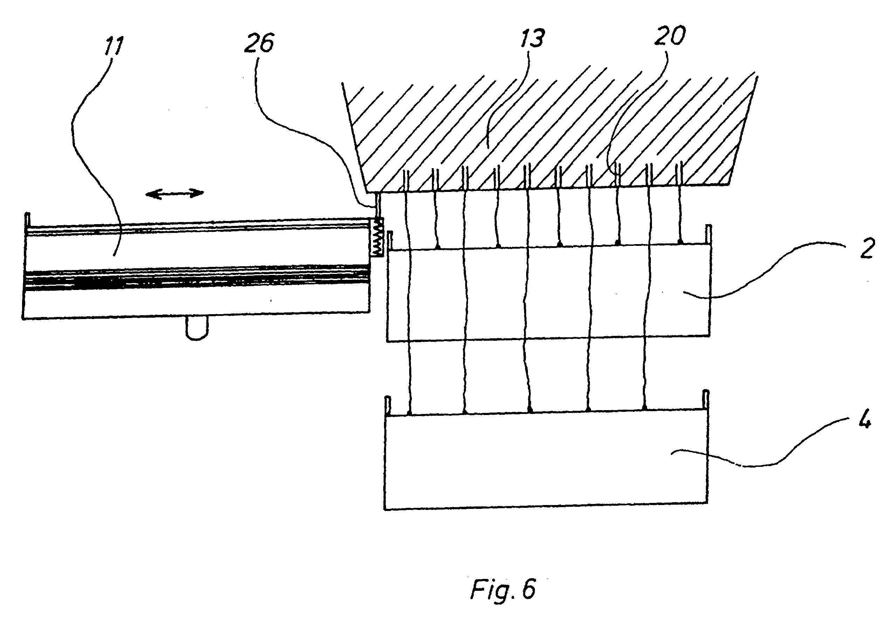

Das Ableitelement 11 ist in der Figur 6 in der Betriebslage dargestellt. Es ist seitlich aus der Vorrichtung herausgeschoben und drückt mit seinem Messer 26, das als Trennelement dient, gegen die Oberfläche des Düsenblocks 13. Zum Übergang in die Vorlaufstellung wird das Ableitelement 11 quer zu den Strängen über die Düsen 20 geschoben, wobei die austretenden Stränge abgetrennt werden und nunmehr die weiterhin austretenden Stränge von dem Ableitelement aufgefangen werden.

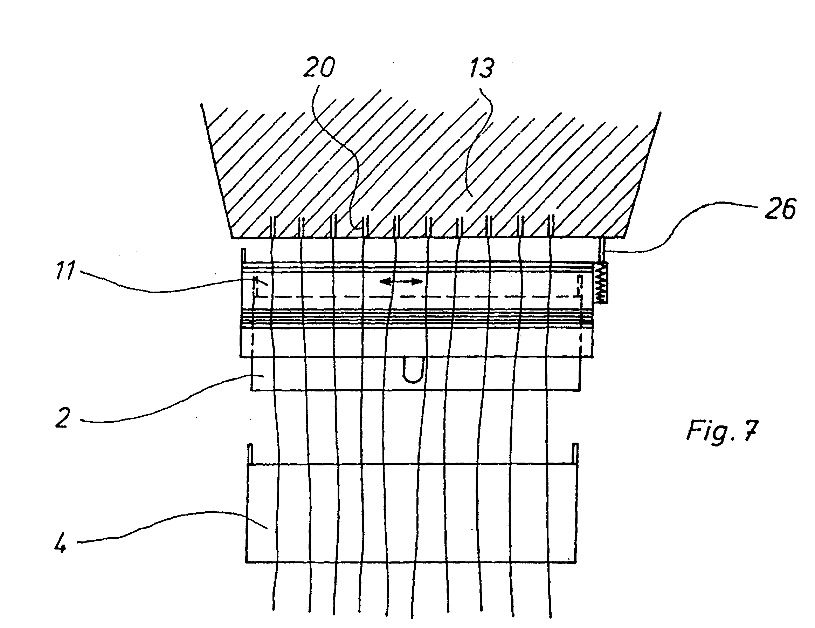

Dies ist in der Fig. 7 dargestellt. Gemäß Fig. 7 befindet sich das Ableitelement 11 in der Vorlaufstellung, in der die aus den Düsen 20 austretenden Stränge von dem Ableitelement 11 soweit weggeleitet werden, daß die Stränge an den Auffangrinnen 2 und 4 vorbeigeleitet werden können. Beim folgenden Übergang in die Betriebsstellung gleitet dann das Messer 26 über die Oberfläche des Düsenblocks 13 und damit die Düsen 20 hinweg, wobei die austretenden Stränge abgeschnitten werden, so daß die nunmehr folgenden Stränge brauchbaren Materials auf die beiden Auffangrinnen fallen können und somit zur weiteren Verarbeitung weitergeleitet werden.

## Patentansprüche

1. Vorrichtung zum Zuleiten von aus Düsen (20) austretenden, schmelzflüssigen Kunststoffsträngen (21,22,23,24) zu einer Ablaufrinne (1) mit einem den Düsen folgenden Kühlwasserzulauf (7), bei der die Düsen in zwei Sätzen von jeweils mindestens einer Reihe (14,15;16,17,18,19) derart angeordnet sind, daß in Ablaufrichtung abwechselnd nebeneinander Stränge des einen und des anderen Satzes in Abstand zueinander geführt werden, **dadurch gekennzeichnet, daß** zwischen die Düsen (20) und die Ablaufrinne (1) zwei übereinander angeordnete Auffangrinnen (2,4) derart zwischengeschaltet sind, daß die aus einem Satz von Düsen austretenden Stränge (21,22,23,24) jeweils als eine Gruppe über eine der Auffangrinnen (2,4) der Ablaufrinne (1) zugeleitet werden, wobei die einzelnen Stränge (21,22,23,24) beider Gruppen auf der Ablaufrinne (1) abwechselnd nebeneinander in kämmender Lage auftreffen und von dieser weitergeleitet werden.

2. Vorrichtung nach Anspruch 1, **dadurch gekennzeichnet, daß** jede Auffangrinne (2,4) zwischen einer Betriebslage, in der die Stränge von einer Auffangrinne (2,4) aufgefangen werden, und einer Vorlaufstellung verschiebbar angeordnet ist, in der die Stränge (21,22,23,24) neben der betreffenden Auffangrinne (2,4) vorbeigeleitet werden.

3. Vorrichtung nach Anspruch 1 oder 2, **dadurch gekennzeichnet, daß** mindestens einer Auffangrinne (2,4) ein Trennelement (3,27) zugeordnet ist, das beim Verschieben durch die Fallinie der Stränge (21,22,23,24) in die Betriebslage die Stränge erfaßt und anschließend durchtrennt.

4. Vorrichtung nach Anspruch 1 oder 2, **dadurch gekennzeichnet, daß** oberhalb der obersten Auffangrinne (2) ein die Düsen (20) überstreichendes Trennelement (3) vorgesehen ist, das beim Verschieben von der Betriebslage in die Vorlaufstellung die Stränge (21,22,23,24) durchtrennt und die weiterhin austretenden Stränge mit einem Ableitelement (12) von den Auffangrinnen (2,4) wegleitet.

## Claims

1. Device for feeding molten plastic strands (21, 22, 23, 24) emerging from dies (20) to a discharge channel (1) with a cooling-water inlet (7) downstream of the dies, in which the dies are arranged in two sets each consisting of at least one row (14, 15; 16, 17, 18, 19) in such a manner that strands from one set and from the other set are guided at a distance from one anther alternately side by side in the dischargc direction, **characterised in that** two collecting channels (2, 4) arranged one above the other are interposed between the dies (20) and the discharge channel (1) in such a manner that the strands (21, 22, 23, 24) emerging from one set of dies are fed in a group to the discharge channel (1) via one of the collecting channels (2, 4), the individual strands (21, 22, 23, 24) of both groups meeting alternately side by side in an intermeshing position on the discharge channel (1) and being advanced by the latter.

2. Device according to claim 1, **characterised in that** each collecting channel (2, 4) is arranged in such a manner that it can be moved between an operating position in which the strands are collected by a collecting channel (2, 4) and a forward position in which the strands (21, 22, 23, 24) are directed past the relevant collecting channel (2, 4).

3. Device according to claim 1 or claim 2, **characterised in that** at least one collecting channel (2, 4) has an associated separating element (3, 27) which takes hold of the strands and then severs them when it is moved through the line of fall of the strands (21, 22, 23, 24) into the operating position.

4. Device according to claim 1 or claim 2, **characterised in that** a separating element (3) passing over the dies (20) is provided above the uppermost collecting channel (2), severs the strands (21, 22, 23, 24) when it is moved from the operating position into the forward position and directs the strands continuing to emerge away from the collecting channels (2, 4) by means of a diverter element (12).

## Revendications

1. Dispositif pour conduire des cordons de matière plastique en fusion (21, 22, 23, 24) sortant de buses (20) à une rigole d'écoulement (1) avec une arrivée d'eau de refroidissement (7) à la suite des buses, dispositif dans lequel les buses sont disposées en deux séries d'au moins une rangée chacune (14, 15 ; 16, 17, 18, 19), de façon que les cordons de l'une et de l'autre série soient guidés dans la direction d'écoulement de manière alternée et juxtaposée à distance les uns des autres, **caractérisé en ce qu'**entre les buses (20) et la rigole d'écoulement (1) sont intercalées deux rigoles réceptrices superposées (2, 4), de façon que les cordons (21, 22, 23, 24) sortant d'une série de buses soient conduits en groupe à la rigole d'écoulement (1) par l'une des rigoles réceptrices (2, 4), les cordons individuels (21, 22, 23, 24) des deux groupes arrivant sur la rigole d'écoulement (1) de manière alternée et juxtaposée en position emboîtée et étant acheminés par celle-ci.

2. Dispositif selon la revendication 1, **caractérisé en ce que** chaque rigole réceptrice (2, 4) est montée mobile entre une position active, dans laquelle les cordons sont reçus par une rigole réceptrice (2, 4), et une position avancée, dans laquelle les cordons (21, 22, 23, 24) passent devant la rigole réceptrice correspondante (2, 4).

3. Dispositif selon la revendication 1 ou 2, **caractérisé en ce qu'**à au moins une rigole réceptrice (2, 4) est associé un élément séparateur (3, 27) qui, lorsqu'il est amené dans sa position active en coupant la trajectoire de chute des cordons (21, 22, 23, 24), reçoit les cordons avant de les sectionner.

4. Dispositif selon la revendication 1 ou 2, **caractérisé en ce qu'**au-dessus de la rigole réceptrice la plus haute (2) est prévu un élément séparateur (3) qui effleure les buses (20) et qui, en passant de la position active à la position avancée, sectionne les cordons (21, 22, 23, 24) et, par l'intermédiaire d'un élément d'évacuation (12), écarte les cordons sortants des rigoles réceptrices (2, 4).
